# EUROPÄISCHE PATENTANMELDUNG

(11) **EP 1 860 814 A1**
(43) Veröffentlichungstag der Anmeldung: **28.11.2007**
(21) Anmeldenummer: 06010858.6
(22) Anmeldetag: 26.05.2006
(51) Int. Cl.: H04L 5/14

(54) **Verfahren zur Interferenzreduzierung**

(71) Anmelder: NOKIA SIEMENS NETWORKS GMBH & CO. KG, 81541 München (DE)
(72) Erfinder: Breuer, Volker, 16727 Bötzow (DE); Färber, Michael, 82515 Wolfratshausen (DE)

(57) **Zusammenfassung**

Die Erfindung betrifft ein Verfahren zur Reduzierung von Interferenzen zwischen zwei Funkkommunikationssystemen (FKS1, FKS2), bei dem ein erstes Funkkommunikationssystem (FKS1) und ein zweites Funkkommunikationssystem (FKS2) auf Funkübertragungsressourcen eines gemeinsamen Frequenzbandes (FB) zur Durchführung einer Funkübertragung zugreifen.

Das erste Funkkommunikationssystem (FKS1) verwendet zugeordnete Funkübertragungsressourcen eines ersten Frequenzbereichs (FB1) und eines zweiten Frequenzbereichs (FB2), wobei der erste Frequenzbereich (FB1) und der zweite Frequenzbereich (FB2) durch eine Duplex-Lücke (DX) getrennt werden. Das zweite Funkkommunikationssystem (FKS2) verwendet zugeordnete Funkübertragungsressourcen eines dritten Frequenzbereichs (FB3), wobei der dritte Frequenzbereich einen Teil der Duplex-Lücke (DX) bildet. Das erste Funkkommunikationssystem (FKS1) und das zweite Funkkommunikationssystem (FKS2) tauschen zur Bildung eines a priori-Wissens über eine netzseitige Verbindung Informationen aus, wobei das a priori-Wissen zumindest die seitens des ersten Funkkommunikationssystems (FKS1) vorgesehenen Funkübertragungsressourcen des ersten Frequenzbereichs (FB1) und des zweiten Frequenzbereichs (FB2) sowie die zum Aufbau und Durchführung einer Verbindung gewünschten Funkübertragungsressourcen des dritten Frequenzbereichs (FB3) umfasst.

Zur Reduzierung von Interferenzen zwischen dem ersten Funkkommunikationssystem (FKS1) und dem zweiten Funkkommunikationssystem (FKS2) wird zumindest beim zweiten Funkkommunikationssystem (FKS2) eine Auswahl von Funkübertragungsressourcen in Abhängigkeit des a priori-Wissens durchgeführt.

## Beschreibung

Die Erfindung betrifft ein Verfahren zur Reduzierung von Interferenzen zwischen zwei Funkkommunikationssystemen, die unterschiedliche Duplex-Technologien zur Funkübertragung verwenden, bei dem ein erstes Funkkommunikationssystem und ein zweites Funkkommunikationssystem auf Funkübertragungsressourcen eines gemeinsamen Frequenzbandes zur Durchführung der Funkübertragung zugreifen.

Aufgrund steigender Teilnehmerzahlen und des steigenden Bedarfs an Diensten bestehen Überlegungen, Funkübertragungsverfahren, die auf Funkübertragungsressourcen eines gemeinsamen Frequenzbandes zugreifen, parallel nebeneinander zu betreiben.

Dabei sollen einerseits durch den Parallelbetrieb auftretende Störungen bzw. Interferenzen auf ein Minimum begrenzt werden, während andererseits ein zur Verfügung stehender Frequenzvorrat bzw. zur Verfügung stehende Funkübertragungsressourcen optimal genutzt werden sollen.

Beispielsweise ist es möglich, ein Duplex-Funkübertragungsverfahren als erstes Funkübertragungsverfahren zu verwenden, das auf Funkübertragungsressourcen zweier Frequenzbereiche zugreift, wobei die beiden Frequenzbereiche durch eine so genannte "Duplex-Lücke" (die mitunter auch als "Duplex-Band" vereinfacht bezeichnet wird) voneinander getrennt sind.

Die beiden Frequenzbereiche, die durch das erste Funkübertragungsverfahren verwendet werden und die "Duplex-Lücke" sind einem gemeinsamen Frequenzband zugeordnet.

Als typische Duplex-Funkübertragungsverfahren sind beispielsweise das "Frequency-Division-Duplex, FDD" oder das "Time-Division-Duplex, TDD"-Funkübertragungsverfahren bekannt.

Bei einem Duplex-Funkübertragungsverfahren besteht die Möglichkeit, parallel zum ersten Funkübertragungsverfahren ein zweites Funkübertragungsverfahren zu verwenden, wobei das zweite Funkübertragungsverfahren Funkübertragungsressourcen der "Duplex-Lücke" verwenden kann.

In einem derartigen Szenario muss sichergestellt werden, dass bei einer Funkübertragung mit Funkübertragungsressourcen, die der "Duplex-Lücke" zuordenbar sind, durch das zweite Funkübertragungsverfahren bestehende Funkübertragungen des ersten Funkübertragungsverfahrens nicht oder nur in geringem Ausmaß gestört werden.

Ebenfalls sollte gewährleistet sein, dass der Empfang beim zweiten Funkübertragungsverfahren bei Verwendung der Funkübertragungsressourcen der "Duplex-Lücke" nicht oder nur in geringem Ausmaß durch das erste Funkübertragungsverfahren gestört wird.

Es ist daher Aufgabe der vorliegenden Erfindung, ein Verfahren zur Interferenzreduzierung bzw. zur Interferenzvermeidung anzugeben, für Funkkommunikationssysteme anzugeben, die wie eingangs beschrieben parallel nebeneinander betrieben werden.

Diese Aufgabe wird durch die Merkmale des Patentanspruchs 1 gelöst. Vorteilhafte Weiterbildungen sind in den Unteransprüchen angegeben.

Das erfindungsgemäße Verfahren ist insbesondere dann vorteilhaft einsetzbar, wenn das betrachtete gemeinsame Frequenzband lediglich durch einen Netzbetreiber verwaltet und verwendet wird.

Das erfindungsgemäße Verfahren ist insbesondere dann vorteilhaft einsetzbar, wenn dieser eine Netzbetreiber beide Funkkommunikationssysteme bzw. beide Funkübertragungsverfahren nebeneinander an jeweils identischen Standorten verwendet.

Beispielsweise werden in den USA jeweilige Frequenzbänder an Netzbetreiber versteigert bzw. verkauft, so dass hier ein Netzbetreiber die vorstehend genannten Voraussetzungen erfüllen kann. Auch das so genannten "UMTS Extensionband" wird voraussichtlich entsprechend global vergeben werden.

Das erfindungsgemäße Verfahren ermöglicht mit geringem Aufwand an zusätzlichen technischen Einrichtungen durch die Verwendung eines so genannten "a priori"-Wissens eine Vermeidung von Interferenzen in einem betrachteten räumlichen Bereich bzw. in einer Funkzelle.

Das erfindungsgemäße Verfahren ist insbesondere dann vorteilhaft einsetzbar, wenn das erste und/oder das zweite Funkübertragungsverfahren Subträger zur Funkübertragung bzw. als Funkübertragungsressourcen verwenden.

Nachfolgend wird die Erfindung anhand einer Zeichnung näher erläutert. Dabei zeigt:
- FIG 1: das erfindungsgemäße Verfahren anhand einer FDD-Funkübertragung und einer dazu parallel erfolgenden TDD- oder FDD-Funkübertragung,
- FIG 2: eine erste, auf dem a priori-Wissen des erfindungsgemäßen Verfahrens basierende Leistungssteuerung zur Interferenzreduzierung,
- FIG 3: eine zweite, auf dem a priori-Wissen des erfindungsgemäßen Verfahrens basierende Leistungssteuerung zur Interferenzreduzierung, und
- FIG 4: eine Betrachtung des erfindungsgemäßen Verfahrens unter der Annahme eines konstanten und als "C/I-Ratio" bezeichneten "Träger zu Interferenz"-Verhältnisses.

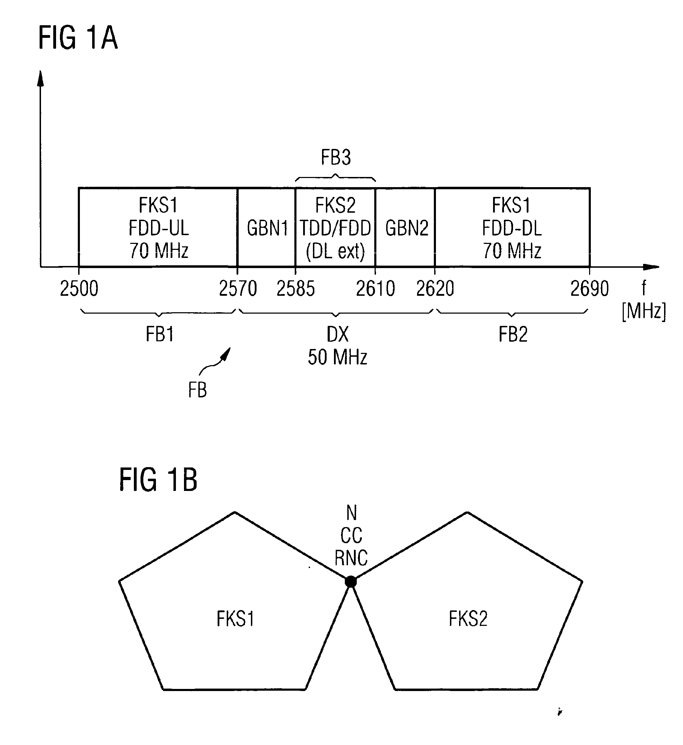

FIG 1A zeigt das erfindungsgemäße Verfahren anhand einer FDD-Funkübertragung und einer dazu parallel erfolgenden TDD- oder FDD-Funkübertragung.

Die FDD-Funkübertragung findet beispielsweise bei einem 3GPP LTE OFDMA-Funkkommunikationssystem Verwendung, wobei die Abkürzung "3GPP" für "3rd Generation Partnership Project" steht, während die Abkürzung "LTE" für "Long Term Evolution" bedeutet.

Die Abkürzung OFDMA beschreibt dabei mit "Orthogonal Frequency Division Multiple Access" ein Funkübertragungsverfahren, bei dem eine Vielzahl an gleichzeitig modulierten Subträgern zur Funkübertragung verwendet wird.

Diese FDD-Funkübertragung wird nachfolgend als Funkübertragungsverfahren eines ersten Funkkommunikationssystems FKS1 betrachtet.

Parallel zur ersten Funkübertragung soll eine TDD-Funkübertragung oder eine weitere FDD-Funkübertragung eines WiMax-Funkkommunikationssystems durchgeführt werden. Diese parallel erfolgende Funkübertragung wird nachfolgend als Funkübertragungsverfahren eines zweiten Funkkommunikationssystems FKS2 betrachtet.

Auf der dargestellten horizontalen Achse sind Frequenzen eines Frequenzbandes FB in MHz aufgetragen.

Ein erster Frequenzbereich FB1 mit einer Breite von 70 MHz reicht von 2500 MHz bis 2570 MHz, ein zweiter Frequenzbereich FB2 mit einer Breite 70 MHz reicht von 2620 MHz bis 2690 MHz.

Zugeordnete Funkübertragungsressourcen des ersten Frequenzbereichs FB1 und des zweiten Frequenzbereichs FB2 werden vom ersten Funkkommunikationssystem FKS1 zur Funkübertragung verwendet.

Dabei wird der erste Frequenzbereich FB1 für eine FDD-Funkübertragung FDD in Uplink-Richtung UL verwendet, während der zweite Frequenzbereich FB2 für eine FDD-Funkübertragung FDD in Downlink-Richtung DL verwendet wird.

Um Störungen zwischen dem ersten Frequenzbereich FB1 und dem zweiten Frequenzbereich FB2 zu vermeiden, ist zwischen beiden eine so genannte "Duplex Lücke" DX als Sicherheitsabstand mit einer Breite von 50 MHz vorgesehen, die somit von 2570 MHz bis 2620 MHz reicht.

Zugeordnete Funkübertragungsressourcen der Duplex-Lücke DX können nun zumindest teilweise vom zweiten Funkkommunikationssystem FKS2 für eine parallel erfolgende Funkübertragung verwendet werden.

Um weiterhin einen Sicherheitsabstand zu gewährleisten, verwendet das zweite Funkkommunikationssystem FKS2 nur Funkübertragungsressourcen eines dritten Frequenzbereichs FB3, der hier von 2585 MHz bis 2610 MHz reicht, um eine TDD-Funkübertragung TDD oder eine FDD-Funkübertragung FDD beispielsweise in Downlink-Richtung DL ext durchzuführen.

Oder das zweite Funkkommunikationssystem FKS2 verwendet nur Funkübertragungsressourcen eines hier nicht detailliert dargestellten dritten Frequenzbereichs FB3', der von 2585 MHz bis 2620 MHz reicht, um eine FDD-Funkübertragung FDD beispielsweise in Downlink-Richtung DL ext durchzuführen. Dies ist insbesondere dann der Fall, wenn eine FDD-Funkübertragung des ersten Funkkommunikationssystems FKS1 nur im ersten Frequenzbereich FKS1 durchgeführt wird.

Verbleibende Funkübertragungsressourcen zwischen den ungenutzten Frequenzen von 2570 MHz bis 2585 MHz bilden ein erstes Guard-Band GBN1, während verbleibende Funkübertragungsressourcen zwischen den ungenutzten Frequenzen von 2610 MHz bis 2620 ein zweites Guard-Band GBN2 bilden.

Die jeweilige Größe des Guard-Band GBN1 bzw. des Guard-Band GBN2 wird aus so genannten System-Scenarien, basierend auf einer "worst case"-Betrachtung, errechnet. Dabei wird der als "worst case" bezeichnete schlimmste Fall dadurch bestimmt, dass ein Funkkommunikationssystem eine Mobilstation am Empfindlichkeitsgrenzwert zu empfangen versucht, während ein anderes Funkkommunikationssystem gleichzeitig sendet.

Um Störungen bzw. Interferenzen des zweiten Funkkommunikationssystems FKS2 auf das erste Funkkommunikationssystems FKS1 zu minimieren bzw. zu verhindern, bilden die beiden Funkkommunikationssysteme FKS1 und FKS2 durch eine Verbindung bzw. durch einen Informationsaustausch eine nachfolgend als a priori-Wissen bezeichnete Planungsinformation zum Aufbau und Betrieb von Funkverbindungen in beiden Funkkommunikationssystemen FKS1 und FKS2.

Dieses a priori-Wissen beinhaltet zumindest die seitens des ersten Funkkommunikationssystems FKS1 verwendeten bzw. für eine Funkübertragung belegte Funkübertragungsressourcen der Frequenzbereiche FB1 und FB2.

Außerdem umfasst es die seitens des zweiten Funkkommunikationssystems FKS2 zum Aufbau und Durchführung einer Verbindung gewünschten Funkübertragungsressourcen des dritten Frequenzbereichs FB3.

Das erste Funkkommunikationssystem FKS1 wird außerdem zusätzlich davon in Kenntnis gesetzt, wie ein Sende/Empfangszyklus des als Zeitduplex (TDD) ausgestalteten zweiten Funkkommunikationssystems FKS2 eingestellt ist.

Mit diesem a priori-Wissen ist es nun möglich, Funkübertragungsressourcen derart zu wählen und zu gestalten, dass übergreifende Interferenzen zwischen den Funkübertragungen des ersten Funkkommunikationssystems FKS1 und des zweiten Funkkommunikationssystems FKS2 weitgehend vermeiden bzw. reduziert werden.

Vorteilhafterweise erfolgt neben der Auswahl und Zuordnung der Funkübertragungsressourcen zusätzlich eine Steuerung der Sendeleistung der gewählten Funkübertragungsressourcen - insbesondere dann wenn im ersten und/oder zweiten Frequenzbereich FB1, FB2 jeweilige Subträger zur Funkübertragung verwendet werden.
Durch eine Absenkung der Sendeleistung kann bei kritischen Paarungen von Funkübertragungsressourcen eine Absenkung der Interferenz erreicht werden.

Zur Bildung des a priori-Wissens sind vorteilhafterweise beide Funkkommunikationssysteme FKS1 und FKS2 über einen gemeinsamen Knoten N miteinander verbunden bzw. weisen beide Funkkommunikationssysteme FKS1 und FKS2 eine gemeinsame Kontrolleinheit CC auf. Dies ist in FIG 1B gezeigt.

Eine gemeinsame Netzverwaltungseinheit kann beispielsweise ähnlich eines an sich bekannten "radio network controller, RNC" ausgestaltet sein, oder - im Falle einer Multistandard fähigen Basisstation - Bestandteil der gemeinsamen Kontrolleinheit CC sein.

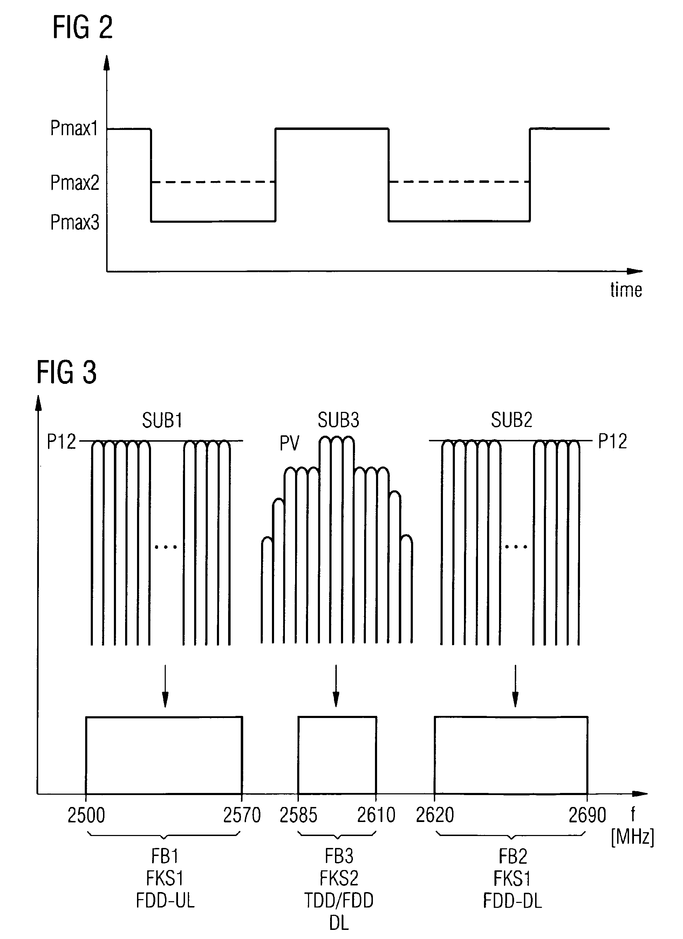

FIG 2 zeigt eine erste, auf dem a priori-Wissen des erfindungsgemäßen Verfahrens basierende Leistungssteuerung zur Interferenzreduzierung.

Mit Bezug auf FIG 1 können innerhalb des dritten Frequenzbereichs FB3 Senderessourcen (TX) und Empfangsressourcen (RX) uneingeschränkt zugeordnet bzw. allokiert werden, die zur Funkübertragung dem zweiten Funkkommunikationssystems FKS2 zur Verfügung stehen.

Gleiches gilt für die Senderessourcen im zweiten Frequenzbereich FB2 des ersten Funkkommunikationssystems FKS1, da diese bedingt durch Schutzabstände und definierten erlaubten Nebenaussendungen der jeweiligen Sender einen koexistenten Betrieb ohne Einschränkungen erlauben.

Um zusätzliche Funkübertragungsressourcen beispielsweise in den beiden nachfolgend als "Schutzband" bezeichneten Guard-Band GBN1 bzw. GBN2 gewinnen zu können, müssen Ressourcen-Scheduler des ersten Funkkommunikationssystems FKS1 und des zweiten Funkkommunikationssystems FKS2 für die Schutzbänder GBN1 und GBN2 ein a priori-Wissen über den Zustandes des jeweils anderen Funkkommunikationssystems haben.

Eine beispielhafte Vorgehensweise zur Nutzung der Funkübertragungsressourcen des Schutzbands GBN2 wird nachfolgend näher erläutert.

Ein Scheduler des ersten (FDD-basierten) Funkkommunikationssystems hat Kenntnis des Sende/Empfangszyklus des zweiten (TDD-basierten) Funkkommunikationssystems.

Zu vermeidende Störungen bzw. Interferenzen treten auf, wenn das zweite Funkkommunikationssystem (TDD) versucht zu empfangen, während gleichzeitig das erste Funkkommunikationssystem (FDD) sendet. Deshalb kann in Zeiten (aufgetragen auf der waagrechten Achse), in denen das zweite Funkkommunikationssystem (TDD) sendet, das erste Funkkommunikationssystem (FDD) ebenfalls uneingeschränkt senden. Dies ist in FIG 2 durch eine Sendeleistung PMax1 (aufgetragen auf der vertikalen Achse) dargestellt.

Bislang wurde auch bei einem Empfangszyklus des zweiten Funkkommunikationssystems (TDD) vom FDD-Sender uneingeschränkt gesendet, wodurch ein "breites" Schutzband GBN2 erforderlich war. Dadurch wurde sichergestellt, dass Nebenaussendungen des FDD-Senders auf ein Maß abklingen, das den Empfang eines TDD-Signals an einer Empfindlichkeitsschwelle nicht beeinträchtigt.

Im gleichzeitig erfolgenden TDD- und FDD-Sendefall stellt dies kein Problem dar, weshalb während dieses Zyklus auch Senderessourcen, die innerhalb des Schutzbandes GBN2 liegen, für die TDD-Funkübertragung verwendet werden können.

Empfangsressourcen für eine TDD-Funkübertragung können dann innerhalb des Schutzbandes GBN2 verwendet werden, wenn die Sendeleistung der FDD-Funkübertragung einen Sendeleistungswert Pmax3 nicht übersteigt. Damit ist sichergestellt, dass innerhalb des TDD-Empfangszyklus auch schwache Signale empfangen werden können.

Wenn die beiden Scheduler Informationen austauschen können oder als gemeinsame Schedulereinheit ausgeführt sind, dann verfügt eine Leistungsregelung des FDD-Funkkommunikationssystems über das Wissen, inwieweit eine TDD-Empfangsverbindung mit hoher Qualität empfangen wird - z.B. dann, wenn sich eine Mobilstation nahe einer Basisstation befindet.

In diesem Fall kann eine tolerierbare FDD-Sendeleistung auf einen Sendeleistungswert, der größer als der Sendeleistungswert Pmax3 ist, definiert werden - nämlich hier dem Sendeleistungswert Pmax2, der im Wertebereich zwischen dem Sendeleistungswert Pmax1 und dem Sendeleistungswert Pmax3 liegt.

Dadurch erhöht sich für die Schedulereinheit des FDD-Funkkommunikationssystems die Wahrscheinlichkeit, eine Funkübertragungsressource zuzuteilen, da die begrenzenden Randbedingungen für die Allokierung erweitert wurden.

Diese Einschränkungen der FDD-Senderessourcen-Zuteilung betreffen ohnehin nur die Allokierungen im Frequenzrandbereich. Weiterhin ist die Verwendung von Sendeleistungswerten zwischen Pmax1 und Pmax2 vom Abstand der betrachteten Frequenzen bzw. Subträger abhängig, da sich mit zunehmendem Abstand eine System-Filterwirkung erhöht und somit die Wirksamkeit der verwendeten Sendeleistung als Störung im Empfangsfall abnimmt.

Im Betriebsfall, der das Schutzband GBN1 betrifft, verändert sich das Verhältnis zwischen Störer und "Opfer". In diesem Fall werden FDD-Empfangssignale durch den TDD-Sender in der Zeitdauer des TDD-Sendezyklus gestört. In der konventionellen Ausprägung wird durch das Schutzband GBN1 sichergestellt, dass es zu keinem Zeitpunkt zu einer Degradation des FDD-Empfangsbetriebs durch das TDD-Sendesignal kommt.

Erfindungsgemäß ist durch eine Information des TDD-Sende/Empfangszyklus eine Allokierung von TDD-Sendesignalen möglich. In einem ersten Schritt können ohne Einschränkungen FDD-Empfangsressourcen im ersten Frequenzbereich FB1 auch am Bandrand allokiert bzw. zugeordnet werden. Weiterhin kann das TDD-Funk-kommunikationssystem TDD-Empfangsressourcen im Schutzband GBN1 allokieren, da sich im Empfangszustand des FDD- Funkkommunikationssystems und des TDD-Funkkommunikationssystems keine Störsituation ergibt.

IM TDD-Sendezustand hat der TDD-Sendescheduler im Schutzband GBN1 die Sendeleistung soweit zu begrenzen (Pmax1), dass im ersten Frequenzbereich FB1 der Empfang der FDD-Empfangssignale nicht beeinträchtigt ist.

Dies wird auch nachfolgend in FIG 3 näher erläutert.

Damit sind der Allokierung von TDD-Senderessourcen Beschränkungen auferlegt, d.h. dass nur für diejenigen TDD-Mobilstationen die Allokierung verwendet werden kann, die robuste Dienste ausführen und/oder die sich nahe an der Basisstation befinden.

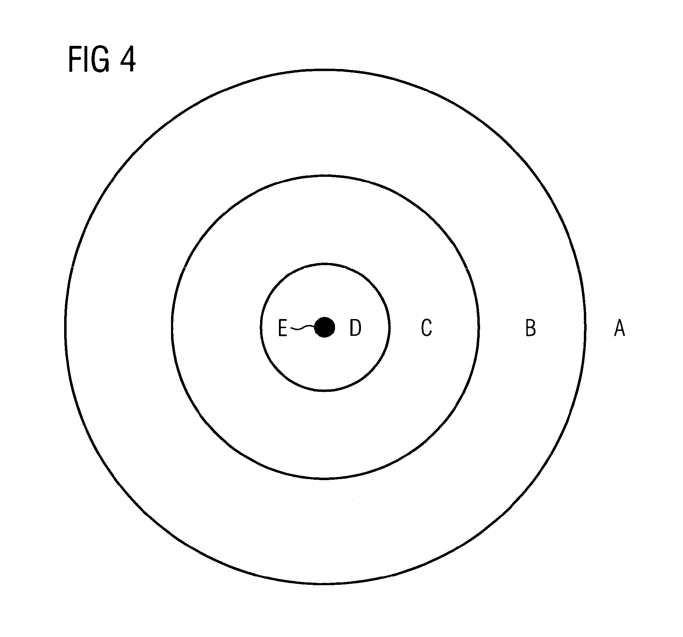

Wenn die Scheduler über den Sende/Empfangszyklus hinausgehende Informationen austauschen können oder als gemeinsam als ein Scheduler ausgestaltet sind, kann die TDD-Sendeleistung an die FDD-Empfnagsverhältnisse angepasst werden. Dies ist auch in der nachfolgend beschriebenen FIG 4 gezeigt.

FIG 3 zeigt eine zweite, auf dem a priori-Wissen des erfindungsgemäßen Verfahrens basierende Leistungssteuerung zur Interferenzreduzierung, bezogen auf die FIG 1.

In den Frequenzbereichen FB1 und FB2 verwendete Subträger SUB1 bzw. SUB2 werden mit einer einheitlichen Sendeleistung P12 übertragen, während im Frequenzbereich FB3 verwendete Subträger SUB3 mit einer uneinheitlichen Sendeleistung PV übertragen werden, um Interferenzen in den beiden Frequenzbereichen FB1 und FB2 zu minimieren.

FIG 4 zeigt eine Betrachtung des erfindungsgemäßen Verfahrens unter der Annahme eines konstanten und als "C/I-Ratio" bezeichneten "Träger zu Interferenz"-Verhältnisses.

Dargestellte Regionen A bis D sind um eine am Ort E befindliche Basisstation angeordnet.

FDD-Mobilgeräte, die sich nahe der Basisstation befinden, können vom TDD-Funkkommunikationssystem her betrachtet mehr Störleistung "vertragen".

In diesem Fall kann unter der Voraussetzung, dass die beiden Scheduler ein gemeinsames Wissen über die Kanalqualität haben, die TDD-Sendeleistung entsprechend angepasst werden.

Zudem ist die Störwirkung der TDD-Sendeleistung a priori bekannt, die im FDD-Empfangsfall zu berücksichtigen ist, durch eine a prori Veranlassung entsprechend erhöhter Sendeleistungen an jeweiligen Mobilstationen. Dadurch wird auch bei dieser Störsituation eine ausreichende Empfangsqualität sichergestellt.

## Patentansprüche

1. Verfahren zur Reduzierung von Interferenzen zwischen zwei Funkkommunikationssystemen (FKS1, FKS2),
- bei dem ein erstes Funkkommunikationssystem (FKS1) und ein zweites Funkkommunikationssystem (FKS2) auf Funkübertragungsressourcen eines gemeinsamen Frequenzbandes (FB) zur Durchführung einer Funkübertragung zugreifen,
- bei dem das erste Funkkommunikationssystem (FKS1) zugeordnete Funkübertragungsressourcen eines ersten Frequenzbereichs (FB1) und eines zweiten Frequenzbereichs (FB2) verwendet, wobei der erste Frequenzbereich (FB1) und der zweite Frequenzbereich (FB2) durch eine Duplex-Lücke (DX) getrennt werden,
- bei dem das zweite Funkkommunikationssystem (FKS2) zugeordnete Funkübertragungsressourcen eines dritten Frequenzbereichs (FB3) verwendet, wobei der dritte Frequenzbereich einen Teil der Duplex-Lücke (DX) bildet,
- bei dem das erste Funkkommunikationssystem (FKS1) und das zweite Funkkommunikationssystem (FKS2) zur Bildung eines a priori-Wissens über eine netzseitige Verbindung Informationen austauschen, wobei das a priori-Wissen zumindest die seitens des ersten Funkkommunikationssystems (FKS1) vorgesehenen Funkübertragungsressourcen des ersten Frequenzbereichs (FB1) und des zweiten Frequenzbereichs (FB2) sowie die zum Aufbau und Durchführung einer Verbindung gewünschten Funkübertragungsressourcen des dritten Frequenzbereichs (FB3) umfasst,
- bei dem zur Reduzierung von Interferenzen zwischen dem ersten Funkkommunikationssystem (FKS1) und dem zweiten Funkkommunikationssystem (FKS2) zumindest beim zweiten Funkkommunikationssystem (FKS2) eine Auswahl von Funkübertragungsressourcen in Abhängigkeit des a priori - Wissens durchgeführt wird.

2. Verfahren nach Anspruch 1, bei dem zur Interferenzreduzierung zusätzlich beim ersten Funkkommunikationssystem (FKS1) eine Auswahl von Funkübertragungsressourcen in Abhängigkeit des a priori-Wissens durchgeführt wird.

3. Verfahren nach Anspruch 1 oder 2, bei dem eine Steuerung der Sendeleistung der zugeordneten Funkübertragungsressourcen in Abhängigkeit des a priori-Wissens durchgeführt wird.

4. Verfahren nach einem der vorhergehenden Ansprüche, bei dem zur Bildung des a priori-Wissens das erste Funkkommunikationssystem (FKS1) und das zweite Funkkommunikationssystem (FKS2) über einen gemeinsamen Knoten oder über eine gemeinsame Netzverwaltungseinheit Informationen austauschen.

5. Verfahren nach einem der vorhergehenden Ansprüche, bei dem als erstes Funkkommunikationssystem (FKS1) und/oder als zweites Funkkommunikationssystem (FKS2) ein OFDMA-Funkkommunikationssystem verwendet wird.

6. Verfahren nach Anspruch 4 oder 5, bei dem als gemeinsame Netzverwaltungseinheit ein "radio network controller, RNC" verwendet wird.

7. Verfahren nach Anspruch 4 oder 5, bei dem als gemeinsame Netzverwaltungseinheit eine zentrale Kontrolleinheit innerhalb einer Multi-Standard-Basisstation verwendet wird.

8. Verfahren nach einem der vorhergehenden Ansprüche,
- bei dem als erstes Funkkommunikationssystem (FKS1) ein Funkkommunikationssystem mit einer FDD-Funkübertragung verwendet wird, und/oder
- bei dem als zweites Funkkommunikationssystem (FKS2) ein Funkkkommunikationssystem mit einer TDD-Funkübertragung verwendet wird.

9. Verfahren nach Anspruch 8,
- bei dem als erstes Funkkommunikationssystem (FKS1) ein 3GPP LTE-Funkkommunikationssystem verwendet wird, und/oder
- bei dem als zweites Funkkommunikationssystem (FKS2) ein WiMax-Funkkkommunikationssystem verwendet wird.

10. Verfahren nach einem der vorhergehenden Ansprüche, bei dem der erste Frequenzbereich (FB1) für eine FDD-Funkübertragung in Uplink-Richtung und der zweite Frequenzbereich (FB2) für eine FDD-Funkübertragung in Downlink-Richtung verwendet wird.

11. Verfahren nach einem der vorhergehenden Ansprüche, bei dem der dritte Frequenzbereich (FB3) für eine FDD-Funkübertragung oder für eine TDD-Funkübertragung in Downlink-Richtung verwendet wird.

12. Verfahren nach einem der vorhergehenden Ansprüche, bei dem verbleibende Funkübertragungsressourcen zwischen dem ersten Frequenzbereich (FB1) und dem dritten Frequenzbereich (FB3) und/oder zwischen dem zweiten Frequenzbereich (FB2) und dem dritten Frequenzbereich (FB3) als Guard-Band (GBN1, GBN2) verwendet werden.
